# FASCICULE DE BREVET EUROPEEN

(11) **EP 3 870 826 B1**
(45) Date de publication et mention de la délivrance du brevet: **28.02.2024**
(21) Numéro de dépôt: 19813088.2
(22) Date de dépôt: 22.10.2019
(51) Int. Cl.: F02K 3/06, F01D 9/04, F01D 25/02, F02C 7/047, F04D 29/58

(54) **DISPOSITIF DE DÉGIVRAGE D'UN BEC DE TURBOMACHINE**
VORRICHTUNG ZUR ENTEISUNG EINER TURBOMASCHINENDÜSE
DEVICE FOR DE-ICING A TURBOMACHINE NOZZLE

(30) Priorité: 22.10.2018 FR 1859742
(43) Date de publication de la demande: 01.09.2021
(73) Titulaire: SAFRAN AIRCRAFT ENGINES, 75015 Paris (FR)
(72) Inventeur: MERCIER, Rémi, Roland, Robert, 77550 Moissy-Cramayel (FR); AUBERT, Fabrice, Michel, François, René, 77550 Moissy-Cramayel (FR); LANGLOIS, Arnaud, 77550 Moissy-Cramayel (FR)
(74) Mandataire: Regimbeau
(86) Numéro de dépôt international: PCT/FR2019/052511
(87) Numéro de publication internationale: WO 2020/084248

(56) Documents cités:
- EP-A1- 3 156 615
- EP-A2- 2 607 655
- US-A1- 2016 097 323

## Description

### DOMAINE TECHNIQUE GENERAL

L'invention concerne le domaine général des turbomachines. L'invention concerne plus particulièrement un dispositif de dégivrage des parties avant d'une turbomachine, et plus précisément du bec de séparation d'une turbomachine. L'invention concerne également un bec de dégivrage pourvu d'un tel dispositif, ainsi qu'une turbomachine comportant un tel dispositif de dégivrage.

### ETAT DE LA TECHNIQUE

Dans une turbomachine à double corps et double flux, les veines d'écoulement du flux primaire et du flux secondaire sont séparées en aval de la soufflante par un bec de séparation.

Un tel bec de séparation d'une turbomachine à double flux comprend un carter interne et un carter externe.

Au sein de la veine primaire, à l'entrée du compresseur basse pression (aussi appelé booster) se trouvent un ensemble d'aubes statoriques et rotoriques pour la compression progressive du flux d'air primaire.

Dans certaines phases de vol et au sol, des conditions atmosphériques givrantes peuvent être rencontrées par la turbomachine notamment lorsque la température ambiante est basse et en présence d'une humidité élevée. Dans ces conditions, de la glace peut se former sur le bec de séparation et les aubes telles que celles de la première rangée d'aubes statoriques rencontrée par le flux d'air primaire. Lorsque ce phénomène se produit, il peut conduire à l'obstruction partielle de la veine primaire, et à l'ingestion de blocs de glace détachées dans la veine primaire. Une obstruction de la veine primaire entraine une sous-alimentation de la chambre de combustion qui peut alors s'éteindre ou empêcher d'accélérer le moteur. Dans le cas du détachement de blocs de glace, ces derniers peuvent endommager le compresseur situé à l'aval et conduire à la réduction de la durée de vie des aubes, au détriment des coûts de maintenance de la turbomachine.

Pour éviter la formation de glace sur le bec de séparation, on connait des techniques consistant à venir prélever de l'air chaud dans la veine primaire, au moyen d'au moins un tube de dégivrage, au niveau d'un compresseur et à l'injecter dans une cavité d'extrémité amont à l'intérieur du bec de séparation. L'air chaud injecté dans le bec de séparation peut ensuite cheminer dans le bec jusqu'à des perçages ou des rainures configurées pour injecter l'air chaud dans la veine primaire qui peut également dégivrer les aubes rotoriques et statoriques, en particulier en arrosant d'air chaud la première rangée d'aubes statoriques en entrée de veine primaire.

Une telle solution est par exemple dans le document US 2003/0035719 A1, en particulier en considérant la figure 2 de ce document.

Un problème est que chaque aube statorique peut présenter un système d'accroche radial au niveau du carter interne qui peut être volumineux quand il s'agit d'accroche par vissage. Aussi, l'espace inter-veine est contraint par le système d'accroche et par l'encombrement des tubes de dégivrage du bec de séparation. Une contrainte est d'optimiser le dimensionnement et la géométrie du tube de dégivrage pour permettre une alimentation efficace de la cavité sans que la présence du système d'accroche n'oblige à augmenter le volume du bec pour que l'alimentation en air de dégivrage soit efficace. En effet, il faut prévoir suffisamment d'espace pour pouvoir placer le tube de dégivrage.

Or, le besoin d'espace dans l'espace inter-veine influence directement la forme des veines aérodynamiques du flux primaire et du flux secondaire avec des impacts non négligeables sur les performances et la masse donc la quantité de carburant consommée par le moteur.

Les documents EP3156615 A1 et US2016/097323 A1 présentent également des dispositifs de l'art antérieur.

### PRESENTATION DE L'INVENTION

L'invention propose de pallier au moins un de ces inconvénients.

A cet effet, l'invention propose, selon un premier aspect, un dispositif de dégivrage destiné à approvisionner de l'air de dégivrage pour un bec de séparation de turbomachine s'étendant selon un axe longitudinal, ladite turbomachine comprenant :
- le bec de séparation qui est destiné à être positionné à l'aval d'une soufflante de la turbomachine et comprenant un carter interne et un carter externe pour former une séparation entre une veine primaire d'écoulement d'un flux primaire et une veine secondaire d'écoulement d'un flux secondaire, lesdits flux étant issus de la soufflante, ledit carter interne et ledit carter externe définissant un espace inter-veine ;
- des aubes directrices de ladite turbomachine destinées à être fixées par des vis au carter interne, de sorte que lesdites vis s'étendent dans l'espace inter-veine,
   ledit dispositif de dégivrage étant positionné dans l'espace inter-veine et comprend
- une pluralité de canaux s'étendant depuis une entrée d'air vers une sortie d'air ;
   les canaux étant agencés les uns par rapport aux autres de sorte qu'ils sont destinés à s'étendre depuis l'entrée d'air vers la sorties d'air en passant entre les vis de fixation des aubes directrices.

L'invention est avantageusement complétée par les caractéristiques suivantes, prises seules ou en une quelconque de leur combinaison techniquement possible :
- Les canaux s'étendant depuis l'entrée d'air vers la sortie d'air sont cylindriques ;
- l'entrée d'air et/ou la sortie d'air présente(nt) une section cylindrique ;
- l'un des canaux s'étend longitudinalement entre l'entrée d'air et la sortie d'air.
- Il comprend cinq canaux.
- Le dispositif a été obtenu par fabrication additive.

L'invention propose, selon un deuxième aspect, un procédé de fabrication d'un dispositif de dégivrage d'un bec de séparation de turbomachine selon le premier aspect de l'invention, dans lequel ledit dispositif est obtenu au moyen d'une fabrication additive, de préférence de type fusion laser d'une poudre.

L'invention propose selon un troisième aspect un ensemble de dégivrage selon la revendication 8.

Ainsi, par rapport à l'état de la technique, le tube de dégivrage prévu dans l'espace inter-veine est remplacé par plusieurs tuyaux qui passent entre les systèmes d'accroches des aubes statoriques fixées au carter interne.

Le fait d'avoir un dispositif de dégivrage qui est intégré entre les vis de l'espace inter-veine du bec de séparation permet de réduire l'encombrement inter-veine.

De cette façon, le compromis aérodynamique / performances du moteur est grandement amélioré par rapport aux solutions connues.

### PRESENTATION DES FIGURES

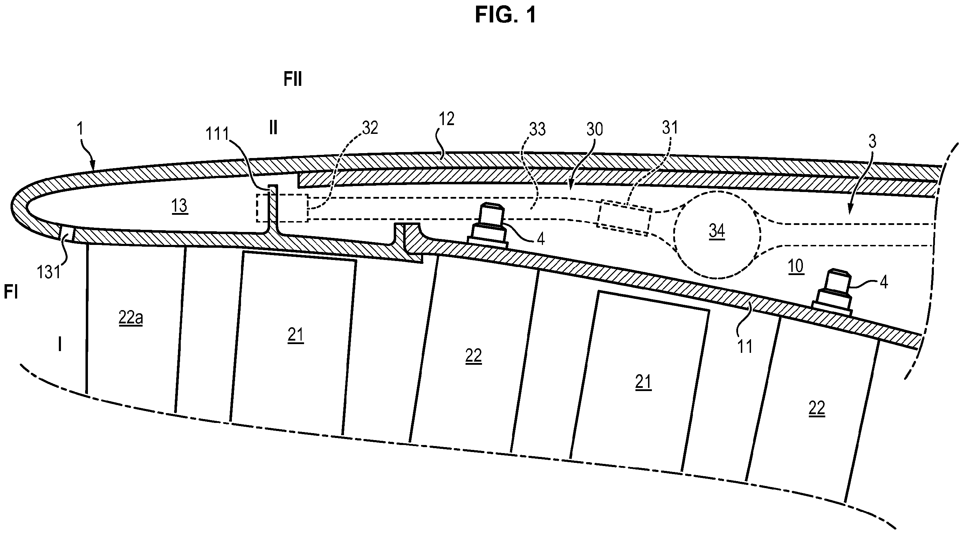

D'autres caractéristiques, buts et avantages de l'invention ressortiront de la description qui suit, qui est purement illustrative et non limitative, et qui doit être lue en regard des dessins annexés sur lesquels outre la figure 1 déjà discutée :
- la figure 1 illustre un bec de séparation d'une turbomachine à double flux comprenant un dispositif de dégivrage conforme à l'invention ;
- la figure 2 illustre un dispositif de dégivrage conforme à l'invention ;
- les figures 3a et 3b illustrent chacune un ensemble de dégivrage selon deux variantes de l'invention.

Sur l'ensemble des figures les éléments similaires portent des références identiques.

### DESCRIPTION DETAILLEE DE L'INVENTION

La **figure 1** illustre un bec 1 de séparation d'une turbomachine à double flux comprenant un dispositif 30 de dégivrage conforme à l'invention.

Comme déjà mentionné, le bec 1 comprend un carter interne 11 et un carter externe 12. En outre, au sein de la veine primaire I, à l'entrée du compresseur 2 basse pression puis en aval se trouvent des ensembles d'aubes statoriques 22, 22a puis rotoriques 21 pour la compression progressive du flux FI d'air primaire.

Une rangée amont d'aubes statoriques 22a comprend des aubes directrices qui sont les premières aubes impactées par le flux primaire FI en entrée d'air de veine primaire I.

Pour éviter la formation de glace sur le bec 1 de séparation, un ensemble de dégivrage permet d'approvisionner de l'air de dégivrage initialement prélevé au niveau du compresseur via au moins un tube 3 pour que de l'air puisse être injecté dans une cavité 13 d'extrémité amont à l'intérieur du bec 1 de séparation. L'air chaud injecté dans le bec 1 de séparation peut ensuite cheminer dans cette cavité du bec 1 jusqu'à des perçages ou des rainures 131 permettant d'injecter l'air chaud dans la veine primaire I de manière à pouvoir dégivrer les aubes, en particulier en arrosant d'air chaud la première rangée directrice d'entrée comprenant des aubes statoriques 22a.

Chaque aube statorique 22, 22a présente un système 4 d'accroche radial au niveau du carter 11 interne. Dans le mode de réalisation représenté, la première rangée directrice d'entrée comprenant des aubes statoriques 22a est par exemple mécanosoudée avec le carter 11. Les autres rangées statoriques d'aubes directrices 22 ont un système d'accroche par vissage dont les vis 4 sont volumineuses. Aussi, l'espace inter-veine 10 est contraint par le système d'accroche et par l'encombrement de dispositifs de dégivrage 30 du bec 1 de séparation. Comme on peut le voir sur la figure 1, les systèmes 4 d'accroche imposent de prévoir suffisamment d'espace pour pouvoir placer les dispositifs de dégivrage 30 par air chaud.

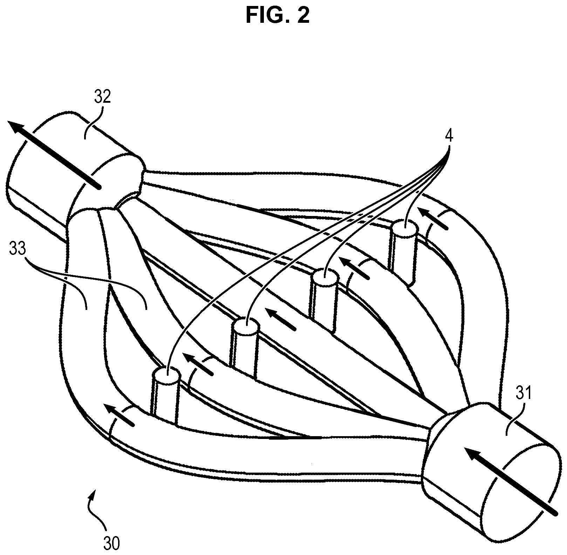

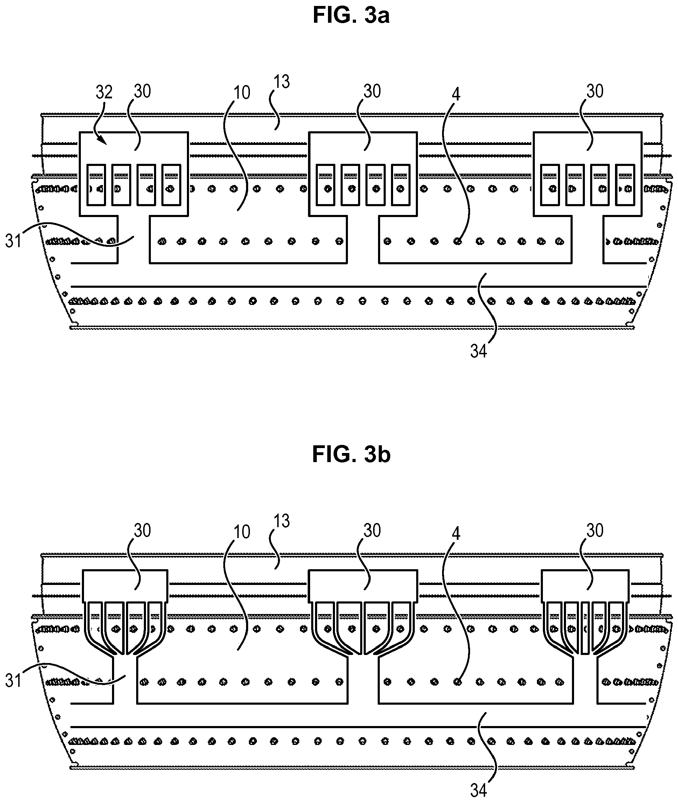

En faisant référence à la figure 1, l'ensemble de dégivrage comprenant plusieurs dispositifs de dégivrage 30 tels qu'illustrés d'une part sur la **figure 2** et d'autre part sur les **figures 3a** et **3b****.** Ces dispositifs sont agencés dans l'espace inter-veine comme illustré sur les **figures 3a** et **3b** par exemple.

Chaque dispositif 30 de dégivrage destiné à être positionné dans l'espace inter-veine comprend une entrée 31 d'air et une sortie 32 d'air. Le flux d'air est représenté par une flèche sur la figure 2. L'entrée 31 d'air et la sortie 32 d'air sont situées l'une en face de l'autre et sont constituées, de préférence, chacune par un cylindre. Chaque dispositif de dégivrage 30 est par exemple en matériau tel qu'un alliage à base Nickel tel que de l'inconel 625 ou le cas échéant tel qu'un acier pouvant résister aux températures de l'air chaud de dégivrage.

Des canaux 33 s'étendent depuis l'entrée 31 d'air vers la sortie 32 d'air.

Les canaux 33 sont configurés pour amener de l'air chaud entrant par l'entrée 31 d'air vers la sortie 32 d'air en s'étendant depuis l'entrée 31 d'air vers la sortie 32 d'air en passant entre les vis 4 de systèmes de fixation des aubes 22 statoriques fixées au carter interne 11.

Les canaux 33 sont de préférence cylindriques mais peuvent prendre d'autres formes. Par exemple entre des collecteurs associés aux entrées et sorties, les canaux peuvent être au moins partiellement droits en s'étendant sensiblement longitudinalement en considérant une parallèle à l'axe général de rotation dans la turbomachine et la direction globale d'écoulement de flux d'air dans la turbomachine (voir la figure 3a).

Comme on peut le voir sur la figure 2, des canaux courbes sont de part et d'autre d'un canal central qui lui est droit entre l'entrée 31 d'air et la sortie 32 d'air. Au plus les canaux sont éloignés du canal central plus le rayon de courbure est accentué. Ceci est dû au fait qu'il faut que tous les canaux partent de l'entrée 31 d'air pour arriver à la sortie 32 d'air. Cette sortie d'air 32 débouche dans le cas de la figure 2 directement dans la cavité 13 par exemple une traversant un orifice correspondant aménagé dans une virole radiale 111 du carter interne 11.

Sur cette figure, le dispositif de dégivrage 30 comprend cinq canaux, bien entendu un nombre différent peut être prévu. Le nombre de canaux dépendra d'un compromis en particulier entre le débit maximum pour chaque dispositif de dégivrage, l'espacement circonférentiel entre les vis de système d'accroche, la hauteur radialement disponible dans l'espace inter-veine, la perte de charge résultant des raccordements des canaux et par exemple la masse allouée de matière pour que le dispositif soit suffisamment résistant.

Un tel dispositif de dégivrage est avantageusement obtenu au moyen d'un procédé de fabrication additive, de préférence de type fusion laser d'une poudre d'alliage à base Nickel ou de type acier. Un tel procédé permet d'obtenir des formes complexes comme celle de la figure 2.

En relation avec les figures 3a et 3b, un ensemble de dégivrage disposé dans le bec de séparation comprend plusieurs dispositifs de dégivrage tels que décrits cidessus. Chacun de ces dispositifs comporte une sortie 32 en collecteur s'étendant circonférentiellement en correspondance de son secteur correspondant dans la cavité 13 circonférentielle. Dans de mode de réalisation, chaque sortie 32 en collecteur comporte au moins un orifice de sortie d'air vers la cavité 13.

Comme on peut le voir sur ces figures, les dispositifs 30 de dégivrages sont destinés à être disposés autour du carter 11 interne du bec de dégivrage de la turbomachine dans l'espace 10 inter-veine, les entrées 31 d'air de chacun des dispositifs de dégivrage étant reliés entré elle par un conduit 34 d'alimentation en air chaud configuré pour amener de l'air chaud vers chaque entrée d'air. Le conduit 34 d'alimentation en air chaud est lui-même alimenté par au moins un tube 3 d'alimentation générale en air chaud.

Le conduit 34 d'alimentation est circonférentiel et épouse dans sa forme la forme du carter interne et s'étend, de préférence, entre deux rangées de vis de fixation d'aubes statoriques.

## Revendications

1. Dispositif de dégivrage destiné à approvisionner de l'air de dégivrage pour un bec (1) de séparation de turbomachine s'étendant selon un axe longitudinal, ledit dispositif comprenant :
- le bec (1) de séparation qui est destiné à être positionné à l'aval d'une soufflante de la turbomachine et comprenant un carter (11) interne et un carter (12) externe pour former une séparation entre une veine (I) primaire d'écoulement d'un flux (FI) primaire et une veine (II) secondaire d'écoulement d'un flux (FII) secondaire, lesdits flux étant issus de la soufflante, ledit carter (11) interne et ledit carter externe définissant un espace (10) inter-veine ;
- des aubes (22) directrices de ladite turbomachine destinées à être fixées par des vis (4) au carter (11) interne, de sorte que lesdites vis s'étendent dans l'espace (10) inter-veine,
ledit dispositif de dégivrage étant positionné dans l'espace inter-veine et comprend
- une pluralité de canaux (33) s'étendant depuis une entrée (31) d'air vers une sortie (32) d'air ;
les canaux (33) étant agencés les uns par rapport aux autres de sorte qu'ils sont destinés à s'étendre depuis l'entrée (31) d'air vers la sorties (32) d'air en passant entre les vis (4) de fixation des aubes (22) directrices.

2. Dispositif, selon la revendication 1, dans lequel les canaux (33) s'étendant depuis l'entrée d'air vers la sortie d'air sont cylindriques.

3. Dispositif selon l'une des revendications précédentes, dans lequel l'entrée d'air et/ou la sortie d'air présente(nt) une section cylindrique.

4. Dispositif selon l'une des revendications précédentes, dans lequel l'un des canaux s'étend longitudinalement entre l'entrée d'air et la sortie d'air.

5. Dispositif selon l'une des revendications précédentes, comprenant cinq canaux.

6. Dispositif de dégivrage selon l'une des revendications précédentes, ledit dispositif ayant été obtenu par fabrication additive.

7. Procédé de fabrication d'un dispositif de dégivrage d'un bec de séparation de turbomachine selon l'une des revendications précédentes, dans lequel ledit dispositif est obtenu au moyen d'une fabrication additive, de préférence de type fusion laser d'une poudre.

8. Ensemble de dégivrage comprenant une pluralité de dispositif de dégivrages , l'ensemble de dégivrage étant destiné à approvisionner de l'air de dégivrage pour un bec (1) de séparation de turbomachine s'étendant selon un axe longitudinal, l'ensemble comprenant
- un bec (1) de séparation qui est destiné à être positionné à l'aval d'une soufflante de la turbomachine et comprenant un carter (11) interne et un carter (12) externe pour former une séparation entre une veine (I) primaire d'écoulement d'un flux (FI) primaire et une veine (II) secondaire d'écoulement d'un flux (FII) secondaire, lesdits flux étant issus de la soufflante, ledit carter (11) interne et ledit carter externe définissant un espace (10) inter-veine ;
- des aubes (22) directrices de ladite turbomachine destinées à être fixées par des vis (4) au carter (11) interne, de sorte que lesdites vis s'étendent dans l'espace (10) inter-veine,
les dispositifs de dégivrage étant positionnés dans l'espace inter-veine autour du carter interne (11), chaque dispositif de dégivrage comprenant :
- une pluralité de canaux (33) s'étendant depuis une entrée (31) d'air vers une sortie (32) d'air ;
les canaux (33) étant agencés les uns par rapport aux autres de sorte qu'ils sont destinés à s'étendre depuis l'entrée (31) d'air vers la sortie (32) d'air en passant entre les vis (4) de fixation des aubes (22) directrices ;
les entrées (31) d'air de chacun des dispositifs de dégivrage étant reliés entre elles par un conduit (34) d'alimentation en air chaud configuré pour amener de l'air chaud vers chaque entrée (31) d'air.

## Patentansprüche

1. Enteisungsvorrichtung, die zur Versorgung mit Enteisungsluft bestimmt ist, für eine Trennnase (1) einer Turbomaschine, die sich gemäß einer Längsachse erstreckt, wobei die Vorrichtung umfasst:
- die Trennnase (1), die bestimmt ist, einem Gebläse der Turbomaschine nachgelagert positioniert zu sein und ein inneres Gehäuse (11) und ein äußeres Gehäuse (12) umfasst, um eine Trennung zwischen einem primären Strömungsstrahl (I) eines primären Stroms (FI) und einem sekundären Strömungsstrahl (II) eines sekundären Stroms (FII) zu bilden, wobei die Ströme von dem Gebläse ausgehen, wobei das innere Gehäuse (11) und das äußere Gehäuse einen Zwischenstrahlbereich (10) definieren;
- Lenkschaufeln (22) der Turbomaschine, die zur Befestigung durch Schrauben (4) am inneren Gehäuse (11) bestimmt sind, so dass sich die Schrauben in den Zwischenstrahlbereich (10) erstrecken,
wobei die Enteisungsvorrichtung im Zwischenstrahlbereich positioniert ist und umfasst
- eine Vielzahl von Kanälen (33), die sich ab einem Lufteinlass (31) zu einem Luftauslass (32) erstrecken;
wobei die Kanäle (33) derart im Verhältnis zueinander eingerichtet sind, dass sie bestimmt sind, sich ab dem Lufteinlass (31) zum Luftauslass (32) zu erstrecken und dabei zwischen den Schrauben (4) zur Befestigung der Lenkschaufeln (22) verlaufen.

2. Vorrichtung nach Anspruch 1, wobei die Kanäle (33), die sich ab dem Lufteinlass zum Luftauslass erstrecken, zylindrisch sind.

3. Vorrichtung nach einem der vorangehenden Ansprüche, wobei der Lufteinlass und/oder der Luftauslass einen zylindrischen Querschnitt aufweist/aufweisen.

4. Vorrichtung nach einem der vorangehenden Ansprüche, wobei sich einer der Kanäle längs zwischen dem Lufteinlass und dem Luftauslass erstreckt.

5. Vorrichtung nach einem der vorangehenden Ansprüche, umfassend fünf Kanäle.

6. Enteisungsvorrichtung nach einem der vorangehenden Ansprüche, wobei die Vorrichtung durch additive Fertigung erhalten wurde.

7. Verfahren zur Herstellung einer Enteisungsvorrichtung für eine Trennnase einer Turbomaschine nach einem der vorangehenden Ansprüche, wobei die Vorrichtung mittels einer additiven Fertigung, vorzugsweise vom Typ Laserfusion eines Pulvers, erhalten wird.

8. Enteisungsanordnung, umfassend eine Vielzahl von Enteisungsvorrichtungen, wobei die Enteisungsanordnung zur Versorgung mit Enteisungsluft bestimmt ist, für eine Trennnase (1) einer Turbomaschine, die sich gemäß einer Längsachse erstreckt, wobei die Anordnung umfasst
- eine Trennnase (1), die bestimmt ist, einem Gebläse der Turbomaschine nachgelagert positioniert zu sein und ein inneres Gehäuse (11) und ein äußeres Gehäuse (12) umfasst, um eine Trennung zwischen einem primären Strömungsstrahl (I) eines primären Stroms (FI) und einem sekundären Strömungsstrahl (II) eines sekundären Stroms (FII) zu bilden, wobei die Ströme von dem Gebläse ausgehen, wobei das innere Gehäuse (11) und das äußere Gehäuse einen Zwischenstrahlbereich (10) definieren;
- Lenkschaufeln (22) der Turbomaschine, die zur Befestigung durch Schrauben (4) am inneren Gehäuse (11) bestimmt sind, so dass sich die Schrauben in den Zwischenstrahlbereich (10) erstrecken,
wobei die Enteisungsvorrichtungen im Zwischenstrahlbereich um das innere Gehäuse (11) positioniert sind, wobei jede Enteisungsvorrichtung umfasst:
- eine Vielzahl von Kanälen (33), die sich ab einem Lufteinlass (31) zu einem Luftauslass (32) erstrecken;
wobei die Kanäle (33) derart im Verhältnis zueinander eingerichtet sind, dass sie bestimmt sind, sich ab dem Lufteinlass (31) zum Luftauslass (32) zu erstrecken und dabei zwischen den Schrauben (4) zur Befestigung der Lenkschaufeln (22) verlaufen;
wobei die Lufteinlässe (31) jeder der Enteisungsvorrichtungen durch eine Versorgungsleitung (34) mit Warmluft untereinander verbunden sind, die dazu ausgelegt ist, Warmluft zu jedem Lufteinlass (31) zu führen.

## Claims

1. A de-icing device for supplying de-icing air to a turbomachine separation nozzle (1) extending along a longitudinal axis, said device comprising:
- the separation nozzle (1) which is intended to be positioned downstream of a fan of the turbomachine and comprising an inner casing (11) and an outer casing (12) to form a separation between a primary flow duct (I) for a primary flow (FI) and a secondary flow duct (II) for a secondary flow (FII), the said flows coming from the fan, the said inner casing (11) and the said outer casing defining an inter-duct space (10);
- guide vanes (22) of said turbomachine intended to be fixed by screws (4) to the internal casing (11), so that said screws extend into the inter-vane space (10),
said de-icing device being positioned in the inter-vein space and comprises:
- a plurality of channels (33) extending from an air inlet (31) to an air outlet (32);
the channels (33) being arranged with respect to each other so that they are intended to extend from the air inlet (31) to the air outlet (32) by passing between the screws (4) fixing the guide vanes (22).

2. Device as claimed in claim 1, wherein the channels (33) extending from the air inlet to the air outlet are cylindrical.

3. Device according to any of the preceding claims, wherein the air inlet and/or the air outlet has/have a cylindrical cross-section.

4. Device according to any of the preceding claims, wherein one of the channels extends longitudinally between the air inlet and the air outlet.

5. Device according to any of the preceding claims, comprising five channels.

6. De-icing device according to any of the preceding claims, said device having been obtained by additive manufacturing.

7. Method of manufacturing a de-icing device for a turbomachine separation nozzle according to one of the preceding claims, wherein said device is obtained by means of additive manufacturing, preferably of the laser powder fusion type.

8. A de-icing assembly comprising a plurality of de-icing devices, the de-icing assembly being intended to supply de-icing air for a turbomachine separation nozzle (1) extending along a longitudinal axis, the assembly comprising
- a separation nozzle (1) which is intended to be positioned downstream of a fan of the turbomachine and comprising an inner casing (11) and an outer casing (12) to form a separation between a primary flow duct (I) for a primary flow (FI) and a secondary flow duct (II) for a secondary flow (FII), the said flows coming from the fan, the said inner casing (11) and the said outer casing defining an inter-duct space (10);
- guide vanes (22) of said turbomachine intended to be fixed by screws (4) to the internal casing (11), so that said screws extend into the inter-vane space (10),
the de-icing devices being positioned in the inter-vein space around the inner casing (11), each de-icing device comprising:
- a plurality of channels (33) extending from an air inlet (31) to an air outlet (32);
the channels (33) being arranged with respect to each other so that they are intended to extend from the air inlet (31) to the air outlet (32), passing between the screws (4) fixing the guide vanes (22);
the air inlets (31) of each of the de-icing devices being connected together by a hot air supply duct (34) configured to supply hot air to each air inlet (31).
